# EUROPÄISCHE PATENTANMELDUNG

(11) **EP 1 826 511 A2**
(43) Veröffentlichungstag der Anmeldung: **29.08.2007**
(21) Anmeldenummer: 07450036.4
(22) Anmeldetag: 28.02.2007
(51) Int. Cl.: F25B 30/02

(54) **Wärmepumpe**

(30) Priorität: 28.02.2006 AT 3352006
(71) Anmelder: Neura Electronics Technische Anlagen GmbH, 4844 Regau (AT)
(72) Erfinder: Huemer, Peter, Dipl.-Ing., 4694 Ohlsdorf (AT)
(74) Vertreter: Hübscher, Helmut

(57) **Zusammenfassung**

Es wird eine Wärmepumpe mit einem Behälter (1), der mit Ausnahme eines Verdampfers alle Wärmepumpenteile einschließlich eines Kompressors (8), eines einen Wärmetauscher für einen Heizkreis bildenden Kondensators (10) und eines Expansionsventils (21) aufnimmt, und mit einem den Verdampfer bildenden Erdkollektor beschrieben, dessen Zu- und Ableitungen (5, 6) durch den Behälter (1) geführt und innerhalb des Behälters (1) an den Kältemittelkreis angeschlossen sind. Um vorteilhafte Konstruktionsbedingungen zu schaffen, wird vorgeschlagen, daß zum lösbaren Anschluß der Zu- und Ableitungen (5, 6) des Erdkollektors an den Kältemittelkreis Steckkupplungen (33, 34) mit einander paarweise gegenüberliegend in zwei Kupplungskörpern (27, 28) gehaltenen, selbstschließenden Kupplungsteilen (29, 30; 31, 32) vorgesehen sind, daß einer der beiden in ihrer Kupplungsstellung verriegelbaren Kupplungskörper (27, 28) eine in Steckrichtung verlaufende Verschiebeführung (35) für den anderen Kupplungskörper (28) aufweist und daß der Kältemittelkreis einen dem Kompressor (8) nachgeschalteten Sammelbehälter (14) für das Kältemittel und ein dem Sammelbehälter (14) nachgeordnetes Absperrventil (19) enthält.

## Beschreibung

Die Erfindung bezieht sich auf eine Wärmepumpe mit einem Behälter, der mit Ausnahme eines Verdampfers alle Wärmepumpenteile einschließlich eines Kompressors, eines einen Wärmetauscher für einen Heizkreis bildenden Kondensators und eines Expansionsventils aufnimmt, und mit einem den Verdampfer bildenden Erdkollektor, dessen Zu- und Ableitungen durch den Behälter geführt und innerhalb des Behälters an den Kältemittelkreis angeschlossen sind.

Um einfache Montagebedingungen für eine Wärmepumpe zu erhalten, ist es bekannt (AT 002 168 U1), den in einem Gehäuse zusammengefaßten, an einen Erdkollektor zur unmittelbaren Verdampfung des Kältemittels angeschlossenen Kältemittelkreis einer Wärmepumpe in einem Wärmepumpenbehälter unterzubringen, der mit Durchführungen für die Zu- und Ableitungen des Erdkollektors und für den Vor- und Rücklauf eines Heizkreises versehen ist. Zweck dieser Maßnahme ist es, insbesondere die Zu- und Ablaufleitungen für den Erdkollektor nicht erst vor Ort bei der Montage mit dem übrigen Kältemittelkreis der Wärmepumpe zu verbinden, sondern diese Verbindungen, die gasdicht sein müssen und üblicherweise je nach dem eingesetzten Leitungswerkstoff Löt- oder Klebemaßnahmen erfordern, in einer Werkstatt vorbereiten zu können. Dies setzt allerdings einen gemeinsamen Transport der Leitungsschleifen des Erdkollektors mit dem Wärmepumpenbehälter voraus. Nachteilig ist außerdem, daß nach der Verlegung der Leiterschleifen des Erdkollektors an der Wärmepumpe nur vor Ort Reparatur- oder Wartungsarbeiten vorgenommen werden können, wenn nicht die Löt- oder Klebeverbindungen zwischen dem Erdkollektor und dem übrigen Kältemittelkreis gelöst werden sollen, was mit einem hohen Aufwand verbunden ist und nur von Fachkräften durchgeführt werden kann, weil ja das Kältemittel vor dem Trennen der Leitungsverbindungen abgesaugt werden muß. Außerdem werden Reparaturen und Wartungsarbeiten vor Ort durch die Zusammenfassung der Wärmepumpenteile in einem Gehäuse erschwert, das wenig Platz für den Zugang zu den Wärmepumpenteilen bietet. Der ein entsprechend größeres Platzangebot mit sich bringende, das Gehäuse der Wärmepumpe aufnehmende Wärmepumpenbehälter vergrößert nur den Platzbedarf für die Unterbringung der Wärmepumpe. Die Teilung des Wärmepumpenbehälters in einen Behälterunterteil und einen haubenartigen Oberteil, um im Falle eines Kältemittelaustrittes eine rasche Entleerung des Behälters beim Abnehmen der Haube zu sichern, ergibt hinsichtlich des Zuganges zu den Wärmepumpenteilen keinen Vorteil.

Der Erfindung liegt somit die Aufgabe zugrunde, eine Wärmepumpe der eingangs geschilderten Art so auszugestalten, daß vor allem die Reparaturund Wartungsarbeiten erheblich erleichtert werden können, ohne die Sicherheit gegenüber einem Kältemittelaustritt zu gefährden.

Die Erfindung löst die Aufgabe dadurch, daß zum lösbaren Anschluß der Zu- und Ableitungen des Erdkollektors an den Kältemittelkreis Steckkupplungen mit einander paarweise gegenüberliegend in zwei Kupplungskörpern gehaltenen, selbstschließenden Kupplungsteilen vorgesehen sind, daß einer der beiden in ihrer Kupplungsstellung verriegelbaren Kupplungskörper eine in Steckrichtung verlaufende Verschiebeführung für den anderen Kupplungskörper aufweist und daß der Kältemittelkreis einen dem Kompressor nachgeschalteten Sammelbehälter für das Kältemittel und ein dem Sammelbehälter nachgeordnetes Absperrventil enthält.

Durch das Vorsehen einer Steckverbindung zwischen dem Erdkollektor und dem übrigen Kältemittelkreis der Wärmepumpe entfällt zunächst die Notwendigkeit, die Leitungsschleifen des Erdkollektors mit dem die übrigen Teile der Wärmepumpe aufnehmenden Behälter gemeinsam transportieren zu müssen. Trotzdem wird ein gasdichter Anschluß des Erdkollektors an den Kältemittelkreis auch durch ungeschultes Personal erreicht, weil werkstattseitig entsprechende Steckkupplungen vorgesehen werden können, die eine selbständige Ausrichtung der paarweise angeordneten Kupplungsteile ge Ausrichtung der paarweise angeordneten Kupplungsteile ermöglichen. Die die Kupplungsteile aufnehmenden Kupplungskörper führen sich nämlich gegenseitig über eine Verschiebeführung in Steckrichtung, so daß alle Voraussetzungen für eine dichte Steckverbindung erfüllt sind, zumal die Kupplungsstellung der beiden Kupplungskörper beispielsweise durch einen an einem Kupplungskörper angelenkten, mit einem Rastansatz am anderen Kupplungskörper zusammenwirkenden Schwenkriegel verriegelt werden kann. Die Aufnahme der einander paarweise zugeordneten Kupplungsteile in zwei Kupplungskörper verhindert außerdem Fehlverbindungen.

Die Lösbarkeit der Verbindungen zwischen dem Erdkollektor und dem übrigen Kältemittelkreis stellt zwar eine wesentliche, aber nicht die einzige Voraussetzung für eine einfache Wartung der Wärmepumpe dar, weil ja dem Lösen der Wärmepumpe vom Erdkollektor eine Entleerung des Erdkollektors vom Kältemittel vorausgehen muß. Zu diesem Zweck ist dem Kompressor ein Sammelbehälter für das Kältemittel nachgeschaltete, so daß mit Hilfe des Kompressors das Kältemittel aus dem Erdkollektor in einem ausreichenden Ausmaß abgepumpt werden kann, wenn die Verbindung des Sammelbehälters zur Zulaufleitung des Erdkollektors über ein Absperrventil gesperrt wird. Da die einander paarweise gegenüberliegenden Kupplungsteile der Steckkupplungen beim Lösen der Steckverbindung selbsttätig schließen, ist sowohl auf der Seite des Behälters als auch auf der des Erdkollektors für einen gasdichten Abschluß der voneinander getrennten Leitungsabschnitte gesorgt. Über den Sammelbehälter kann nach einer Wiederherstellung des Erdkollektoranschlusses der Erdkollektor wieder mit Kältemittel in einer vorgegebenen Menge gefüllt werden.

Um besonders vorteilhafte Handhabungsbedingungen zu erzielen, können die Zu- und Ableitungen des Erdkollektors durch eine Durchtrittsöffnung des Behälterbodens in den Behälter ragen. Wenn zugleich die Verschiebeführung zwischen den Kupplungskörpern senkrecht zum Behälterboden verläuft, braucht zum Lösen der Steckkupplungen nach einer Entriegelung der Kupplungskörper lediglich eine lösbar in den Behälter eingesetzte Tragplatte mit den Wärmepumpenteilen angehoben zu werden. Mit dem Einsetzen der Tragplatte in den Behälter werden in umgekehrter Reihenfolge die Steckverbindungen zwischen dem Erdkollektor und der übrigen Wärmepumpe wieder geschlossen. Die Anordnung der im Behälter unterzubringenden Teile der Wärmepumpe auf einer aus dem Behälter entnehmbaren Tragplatte bringt darüber hinaus den Vorteil mit sich, daß trotz einer gedrängten Anordnung der einzelnen Wärmepumpenteile ein weitgehend freier Zugang zu diesen Teilen von der Umfangsseite der Tragplatte her gewährleistet wird, insbesondere wenn die Tragplatte aus dem Behälter gehoben wird.

Um die restliche Abwärme des Kältemittels nach seiner Abkühlung aufgrund der Kondensation im Wärmetauscher für den Heizkreis nützen zu können, kann im Strang des Kältemittelkreises zwischen der Steckkupplung für die Ablaufleitung des Erdkollektors und dem Kompressor ein Zwischenwärmetauscher eingebunden werden, der von der Kältemittelströmung zwischen dem Kondensator und dem Expansionsventil beaufschlagt wird, so daß das vom Erdkollektor dem Kompressor zuströmende, verdampfte Kältemittel zusätzlich aufgewärmt wird. Eine solche zusätzliche Erwärmung des Kältemittels birgt bei bestimmten Betriebszuständen allerdings die Gefahr einer Wärmeüberlastung des Kompressors. Um dieser Gefahr zu begegnen, können die Zu- und Ableitungen des Zwischenwärmetauschers auf der Beaufschlagungsseite durch eine mit einem Absperrventil versehene Kurzschlußleitung verbunden werden. Wird die Kurzschlußleitung geöffnet und der Wärmetauscher auf der Beaufschlagungsseite somit kurzugeschlossen, so entfällt die zusätzliche Erwärmung des vom Kompressor angesaugten, verdampften Kältemittels aus dem Erdkollektor.

In der Zeichnung ist der Erfindungsgegenstand beispielsweise dargestellt. Es zeigen
- Fig. 1: eine erfindungsgemäße Wärmepumpe ausschnittsweise im Bereich des Behälters in einer schematischen Draufsicht und
- Fig. 2: eine Steckkupplung zum Anschließen der Zu- und Ablaufleitungen des Erdkollektors in einer vereinfachten Seitenansicht.

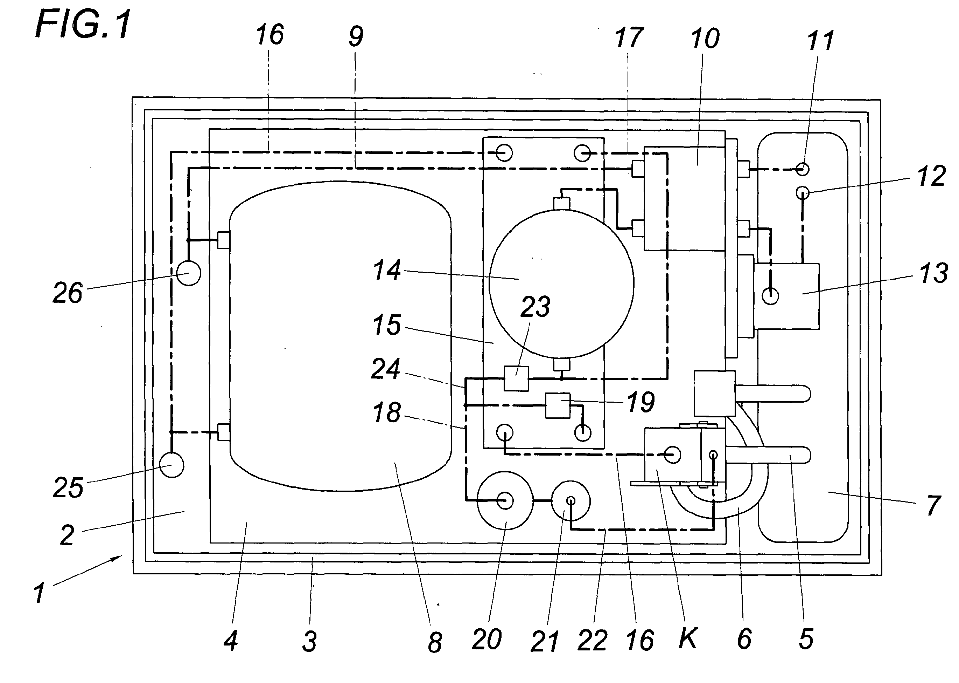

Wie der Fig. 1 entnommen werden kann, ist zur Aufnahme einer an einen Erdkollektor zur direkten Verdampfung des Kältemittels angeschlossenen Wärmepumpe ein Behälter 1 vorgesehen, der aus einem Behälterboden 2 und aus einer Haube besteht, die auf den mit einem Umfangssteg 3 versehenen Boden 2 aufgesetzt werden kann. Der Behälterboden 2 ist mit einer abnehmbaren Tragplatte 4 für die einzelnen Teile der Wärmepumpe versehen. Die Zu-und Ableitungen 5, 6 des Erdkollektors, an die einzelne parallele, im Boden verlegte Leitungsschleifen in herkömmlicher Weise über Verteiler und Sammler angeschlossen sind, greifen durch eine Durchtrittsöffnung 7 im Behälterboden 2 in den Behälter 1 ein und werden mit Hilfe einer Steckkupplungseinrichtung K an den auf der Tragplatte 4 installierten Kältemittelkreis angeschlossen. Dieser Kältemittelkreis enthält in herkömmlicher Weise einen Kompressor 8, der über eine Kältemitteldruckleitung 9 an einen Kondensator 10 angeschlossen ist, der durch einen Wärmetauscher zur Erwärmung des Wärmeträgers eines Heizkreises gebildet wird. Der Vorlauf dieses Heizkreises ist mit 11 und der Rücklauf mit 12 bezeichnet. Der Behälter 1 nimmt außerdem eine Heizkreispumpe 13 auf. Vom Kondensator 10 strömt das kondensierte Kältemittel in einen Sammelbehälter 14 und vom Sammelbehälter 14 zu einem Zwischenwärmetauscher 15 für das dem Kompressor 8 von der Ableitung 6 des Erdkollektors über den Leitungsstrang 16 zuströmenden Kältemittels. Die Zu- und Ableitungen des Zwischenwärmetauschers 15 auf der Beaufschlagungsseite durch das kondensierte Kältemittel sind mit 17 und 18 bezeichnet. Die Ableitung 18 weist ein Absperrventil 19 auf und führt zu einem Filtertrockner 20, der ausgangsseitig an einem Expansionsventil 21 angeschlossen ist, das über eine Anschlußleitung 22 und die Steckkupplungseinrichtung K mit der Zuleitung 6 des Erdkollektors verbunden ist. Zwischen der Zuleitung 17 und der Ableitung 18 des Zwischenwärmetauschers 15 ist eine mit einem Absperrventil 23 versehene Kurzschlußleitung 24 vorgesehen. Neben den sonst üblichen Überwachungseinrichtungen sind außerdem Druckwächter 25 und 26 in dem saugseitig an den Kompressor 8 angeschlossenen Strang 16 sowie in der Kältemitteldruckleitung 9 vorgesehen.

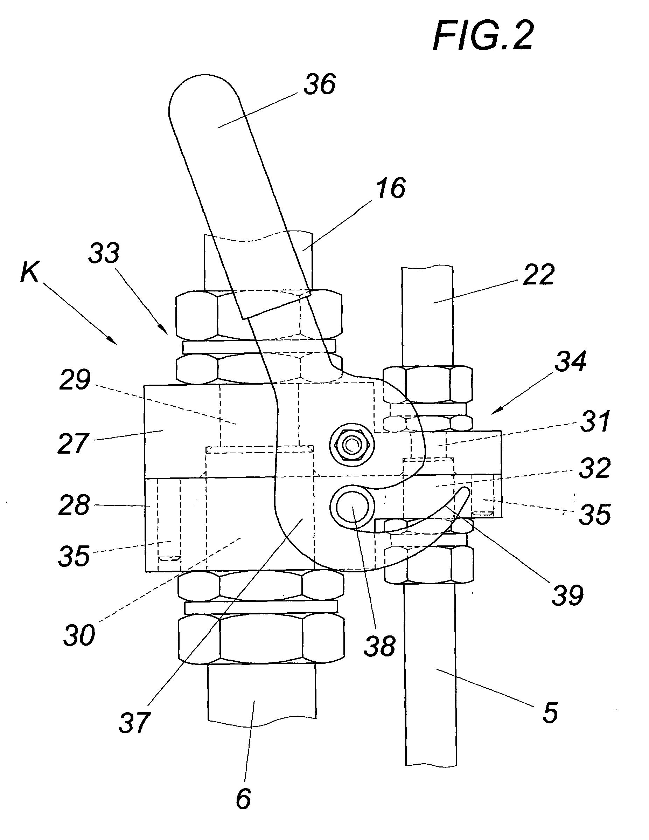

Die Steckkupplungseinrichtung K ist in der Fig. 2 näher dargestellt. Sie weist zwei Kupplungskörper 27 und 28 mit einander paarweise gegenüberliegenden Kupplungsteilen 29, 30 bzw. 31, 32 von Steckkupplungen 33, 34 auf, mit deren Hilfe die Zu- und Ableitungen 5, 6 des Erdkollektors an den übrigen Kältemittelkreis über die Leitungen 16 und 22 angeschlossen werden. Der Kupplungskörper 27 weist eine in Steckrichtung verlaufende Verschiebeführung 35 in Form von Führungsbolzen für den Kupplungskörper 28 auf, der mit entsprechenden Aufnahmebohrungen für die Führungsbolzen versehen ist. Beim Kuppeln der Steckkupplungseinrichtung K werden somit die beiden Kupplungskörper 27 und 28 gegeneinander ausgerichtet und in der Steckrichtung geführt, so daß die einander paarweise gegenüberliegenden Kupplungsteile 29, 30 bzw. 31 und 32 sicher gekuppelt werden. Die Kupplungsstellung selbst wird durch einen mit einem Betätigungsgriff 36 versehenen Schwenkriegel 37 verriegelt, der am Kupplungskörper 27 angelenkt ist und einen rollenförmigen Rastansatz 38 des Kupplungskörpers 28 in einer Kulissenführung 39 aufnimmt, die beim Verriegeln ein Zusammenziehen der Kupplungskörper 27, 28 in Steckrichtung bedingt und damit einen sicheren Kupplungseingriff gewährleistet. Da die Steckkupplungseinrichtung K hinsichtlich ihrer Verschiebeführung 35 senkrecht zur Tragplatte 4 ausgerichtet ist und der die Kupplungsteile 29 und 31 für die Leitungen 16 und 22 aufnehmende Kupplungskörper 27 auf der der Tragplatte 4 abgekehrten Seite der Kupplungseinrichtung K vorgesehen ist, kann nach einer Entriegelung der Kupplungskörper 27 und 28 der auf der Tragplatte 4 abgestützte Teil der Wärmepumpe aus dem Behälter 1 abgehoben werden. Davor ist allerdings für eine Entleerung des Erdkollektors vom Kältemittel zu sorgen. Zu diesem Zweck wird das dem Sammelbehälter 14 nachgeschaltete Absperrventil 19 geschlossen, so daß über den Kompressor 8 das Kältemittel aus den Leitungsschleifen des Erdkollektors abgesaugt und in den Sammelbehälter 14 gefördert werden kann. Wird über den Druckwächter 25 im Strang 16 des Kältemittelkreises ein vorgegebener Unterdruck ermittelt, so wird der Kompressor 8 abgestellt und angezeigt, daß nunmehr die Steckkupplungseinrichtung 8 geöffnet werden kann. Da die Kupplungsteile 29, 30 und 31, 32 beim Entkuppeln selbstständig schließen, wird ein Ausströmen des Kältemittels aus diesen Kupplungsteilen nach der Entkupplung der Steckverbindungen ausgeschlossen.

In der üblichen Arbeitsweise wird das über den Strang 16 dem Kondensator 10 durch den Kompressor 8 zugeförderte Kältemittel unter einer Wärmeabgabe an den Heizkreislauf kondensiert und über den Sammelbehälter 14 dem Zwischenwärmetauscher 15 zugeführt, um mit Hilfe der restlichen Abwärme des kondensierten Kältemittels eine zusätzliche Vorwärmung des im Erdkollektor verdampften Kältemittels zu erreichen, das über den Strang 16 von der Steckkupplungseinrichtung K zum Kompressor 8 geführt wird. Das aus dem Zwischenwärmespeicher 15 über die Ableitung 18 bei offenem Absperrventil 19 ausströmende, kondensierte Kältemittel wird über den Filtertrockner 20 zum Expansionsventil 21 geführt, um nach der durch die Entspannung bedingten Abkühlung im Erdkollektor unmittelbar verdampft zu werden.

Aufgrund der zusätzlichen Erwärmung des im Erdkollektor verdampften Kältemittels über den Zwischenwärmetauscher 15 besteht die Gefahr, daß bei bestimmten Betriebsbedingungen der Kompressor 8 einer Wärmeüberlastung ausgesetzt wird. Um eine solche Wärmeüberlastung zu vermeiden, kann der Zwischenwärmetauscher 15 über die Kurzschlußleitung 24 kurzgeschlossen werden. Zu diesem Zweck ist das in der Kurzschlußleitung 24 vorgesehene, üblicherweise gesperrte Absperrventil 23 zu öffnen. Mit einer zeitlichen Verzögerung kann das Absperrventil 19 in der Ableitung 18 des Zwischenwärmetauschers 15 geschlossen werden, um eine allfällige Restströmung des Kältemittels durch den Zwischenwärmetauscher 15 zu vermeiden.

## Patentansprüche

1. Wärmepumpe mit einem Behälter (1), der mit Ausnahme eines Verdampfers alle Wärmepumpenteile einschließlich eines Kompressors (8), eines einen Wärmetauscher für einen Heizkreis bildenden Kondensators (10) und eines Expansionsventils (21) aufnimmt, und mit einem den Verdampfer bildenden Erdkollektor, dessen Zu- und Ableitungen (5, 6) durch den Behälter (1) geführt und innerhalb des Behälters (1) an den Kältemittelkreis angeschlossen sind, **dadurch gekennzeichnet, daß** zum lösbaren Anschluß der Zu- und Ableitungen (5, 6) des Erdkollektors an den Kältemittelkreis Steckkupplungen (33, 34) mit einander paarweise gegenüberliegend in zwei Kupplungskörpern (27, 28) gehaltenen, selbstschließenden Kupplungsteilen (29, 30; 31, 32) vorgesehen sind, daß einer der beiden in ihrer Kupplungsstellung verriegelbaren Kupplungskörper (27, 28) eine in Steckrichtung verlaufende Verschiebeführung (35) für den anderen Kupplungskörper (28) aufweist und daß der Kältemittelkreis einen dem Kompressor (8) nachgeschalteten Sammelbehälter (14) für das Kältemittel und ein dem Sammelbehälter (14) nachgeordnetes Absperrventil (19) enthält.

2. Wärmepumpe nach Anspruch 1, **dadurch gekennzeichnet, daß** die Zu-und Ableitungen (5, 6) des Erdkollektors durch eine Durchtrittsöffnung (7) des Behälterbodens (2) in den Behälter (1) ragen, daß die dem Behälter (1) zugehörigen Teile der Wärmepumpe auf einer aus dem Behälter (1) entnehmbaren Tragplatte (4) vorgesehen sind und daß die Verschiebeführung (35) zwischen den Kupplungskörpern (27, 28) senkrecht zur Tragplatte (4) verläuft.

3. Wärmepumpe nach Anspruch 1 oder 2, **dadurch gekennzeichnet, daß** im Strang (16) des Kältemittelkreises zwischen der Steckkupplung (33) für die Ablaufleitung (6) des Erdkollektors und dem Kompressor (8) ein Zwischenwärmetauscher (15) eingebunden ist, der von der Kältemittelströmung zwischen dem Kondensator (10) und dem Expansionsventil (21) beaufschlagt wird.

4. Wärmepumpe nach Anspruch 3, **dadurch gekennzeichnet, daß** die Zu-und Ableitungen (17, 18) des Zwischenwärmetauschers (15) auf der Beaufschlagungsseite durch eine mit einem Absperrventil (23) versehene Kurzschlußleitung (2) verbunden sind.
